Europäisches Patentamt

European Patent Office

Office européen des brevets

(11) Publication number: **0 345 914 B1**

# EUROPEAN PATENT SPECIFICATION

(45) Date of publication of patent specification: **19.01.94**  (51) Int. Cl.⁵: **E05F 15/00**

(21) Application number: **89300345.9**

(22) Date of filing: **16.01.89**

(54) **A motor-powered opening/closing apparatus for a window or door.**

(30) Priority: **08.06.88 JP 140905/88**
**08.06.88 JP 140906/88**
**08.06.88 JP 140907/88**

(43) Date of publication of application:
**13.12.89 Bulletin 89/50**

(45) Publication of the grant of the patent:
**19.01.94 Bulletin 94/03**

(84) Designated Contracting States:
**DE FR GB IT**

(56) References cited:
EP-A- 0 015 393          WO-A-85/01773
DE-A- 3 206 466          DE-A- 3 325 311
DE-A- 3 630 003          DE-A- 3 724 085

(73) Proprietor: **KABUSHIKI KAISHA RIKEN**
**1-13-15, Kudankita**
**Chiyoda-ku**
**Tokyo(JP)**

(72) Inventor: **Osamu, Yaguchi**
**17-19-104, Sakae-cho**
**Kashiwazaki-shi Niigata-ken(JP)**

(74) Representative: **Jackson, David Spence et al**
**REDDIE & GROSE**
**16, Theobalds Road**
**London, WC1X 8PL (GB)**

Rank Xerox (UK) Business Services
(3.10/3.09/3.3.3)

## Description

The present invention relates to a motor-powered opening/closing apparatus comprising: an electromagnetic motor serving as a mechanical power source for a mechanism for opening/closing a slidable window or a door; a constraint stop circuit for detecting a constrained state of said motor and stopping power supply to said motor; a sensor for detecting clamping of a foreign object between a fixed frame and an edge of the window or door; and switching means for turning off the power supply to said motor or turning on the power supply and inverting its polarity in response to an output from the sensor.

In a conventional automobile power window motor drive, a motor is stopped in response to outputs from sensors such as limit switches for detecting ascending and descending ends of a window glass. Another conventional motor driver uses an overcurrent detection/timer circuit or an overcurrent limiter circuit in place of an end position sensor to cut off or limit a drive current when the motor is stopped or becomes in a constrained state.

In power window stop control using a limit switch, a constraining current is continuously supplied to the motor while part of a driver or passenger body is clamped between a glass and a window frame during upward driving of the window glass. Therefore, the driver or passenger may be hurt.

The overcurrent detection/timer circuit or the overcurrent detection limiter circuit primarily aims at detecting an increase in torque on the basis of a constraining current. Therefore, a large torque is generated until or even after a completely constrained state occurs. If a soft object such as a child's body is clamped between the window glass and the window frame, the limiter circuit may not immediately respond and stop the motor.

Since the conventional detection arrangements are based on current detection, they tend to be adversely affected by variations in power source voltage. Circuit breaking or torque limiting cannot be accurately performed. In particular, when a voltage level is decreased, a constraining current of level lower than a detection level may continuously flow.

In order to solve the above problem, a pressure sensor may be arranged on a glass contact surface of an upper window frame in an automobile. When the window glass reaches the upper end or a foreign object is clamped between the window glass and the window frame, the motor may be stopped in response to an output from the pressure sensor.

However, if the sensitivity of the pressure sensor is improved to prevent an accident as described above, a slight distortion of the window frame which is caused by deterioration over time may cause incomplete closing of the window glass. In order to prevent this, the sensitivity level of the pressure sensor must be lowered to allow complete closing of the window glass with a sufficient pressure. In this case, the pressure sensor does not respond to clamping of a body portion between the window glass and the window frame.

DE-A-3 630 003 describes a power window apparatus constituting a motor-powered opening/closing apparatus of the kind defined hereinbefore at the beginning and having further sensor means for measuring a characteristic of the motor, and comparing means for comparing the motor characteristic measured by the further sensor means with a previous or old value of the motor characteristic measured a predetermined time before by the further sensor means. The apparatus includes a delay amplifier for inserting the required delay in the measurement of the previous or old value of the motor characteristic. The specific motor characteristic is a waveform sensed by a sensor that includes a resistor for converting the motor current into a voltage which is applied to the respective inputs of the delay amplifier and a real time amplifier. The delay amplifier circuitry includes a resistor and a capacitor which in effect act as a memory circuit for the old or previous value of the motor characteristic voltage.

WO-A-85/01773 describes an obstruction detection means for a door operating D.C. electric motor, the door being a motor driven garage door of the rolling kind. The detection means produces a continuous load signal indicative of the magnitude of the back EMF of the motor and includes a differentiating circuit that detects the rate of change of this signal and means that issue an obstruction signal to stop or reverse the motor if the magnitude of the rate of change exceeds a predetermined value. Further means may be included which compares the load signal with a reference signal and issues an obstruction signal if the load signal changes by a predetermined magnitude.

The present invention has been made in consideration of the above situation, and has as its object to provide a motor-powered opening/closing apparatus such as a power window apparatus which satisfies both stopping of a power window motor with high sensitivity detection of clamping of a foreign object between the window glass and a window frame and closing of the window glass with sufficiently large force.

It is another object of the present invention to simplify an arrangement of a circuit for detecting a constrained state of a motor and shutting off its power supply.

According to the present invention a motor-powered opening/closing apparatus of the kind defined hereinbefore at the beginning is characterised by said sensor being arranged on the fixed frame close to and on a contact line between the fixed frame and the edge of the window or door; and in that the constraint stop circuit comprises a drive transistor connected between a power source and one terminal of said motor for supplying/shutting off the current to said motor; and detection means connected to said drive transistor and operable to detect a level of an induced electromotive force generated by rotation of the rotor of the motor and to turn on/turn off said drive transistor in dependence on the detected level.

A preferred embodiment of the present invention allows arbitrary setting of a motor torque in a constrained state.

Another feature of the preferred embodiment prevents detection of a motor constrained state from being influenced by a power source voltage.

A preferred embodiment of the present invention provides a fail-safe circuit which shuts off power upon the occurrence of a motor constrained state under any condition.

Still another preferred feature is means to detect clamping of even a very small foreign object.

Preferably also a sensor failure caused by vibration of the window or door is prevented.

With the arrangement of clamping detection sensor of the present invention, the contact force of the window or door in the closed position can be sufficiently increased so as to prevent degradation of a closing state against deformation or the like of the fixed frame over time. At the same time, sensitivity of the sensor can be increased to immediately respond to clamping of a foreign object between the window and the fixed frame. Therefore, the closing pressure and the detection sensitivity can be independently set.

The invention will now be described by way of example with reference to the accompanying drawings, in which:

Fig. 1 is a circuit diagram of an automobile power window apparatus which employs a motor-powered opening/closing apparatus embodying the present invention;

Fig. 2A is a side view of an automobile door;

Fig. 2B is a sectional view showing the main part of the door shown in Fig. 2A.

Fig. 3 is a circuit diagram showing the main part of a motor control circuit in the apparatus shown in Fig. 1;

Figs. 4A to 4C are circuit diagrams of an armature of a motor;

Fig. 5 is a waveform chart of a terminal voltage of the motor;

Fig. 6 is a circuit diagram of an automobile power window apparatus according to a second embodiment of the present invention;

Figs. 7 to 9 show an arrangement of pressure sensors according to the present invention, in which Fig. 7 is a sectional view showing the main part of an automobile window portion, Fig. 8 is a sectional view of one of the pair of pressure sensors, and Fig. 9 is a view showing electrical connections of the pressure sensors; and

Figs. 10 to 14 shows another arrangement of pressure sensors, in which Fig. 10 is a sectional view corresponding to Fig. 7, Fig. 11 is a sectional view showing one of the pair of pressure sensors, Fig. 12 is an exploded view showing a structure of the pressure sensor, Fig. 13 is an equivalent circuit diagram of the pressure sensor, and Fig. 14 is a view showing electrical connections of the pressure sensors.

## DETAILED DESCRIPTION OF THE PREFERRED EMBODIMENT

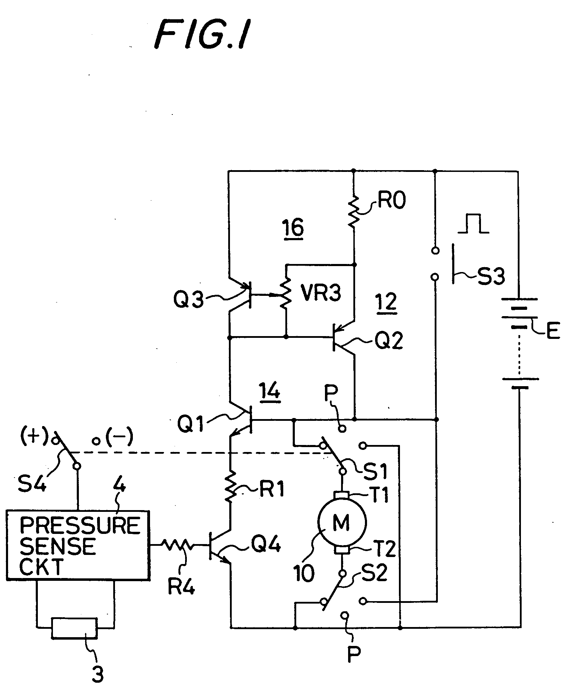

Fig. 1 shows a control circuit (power window circuit) according to an embodiment of the present invention.

Referring to Fig. 1, a motor 10 is a DC brush motor built into a window lift mechanism. Switches S1 and S2 connected to both terminals of the motor 10 are interlocked with each other upon operation of an ascending/descending operation switch for a window glass. During ascending and descending, both the terminals of the motor 10 are connected to a drive power source E such that the polarities at the terminals are inverted by the switches S1 and S2. Stop positions P respectively provided to the switches S1 and S2 are neutral positions to stop power supply.

A transistor Q2 connected to a terminal of the motor 10 through the switch S1 constitutes a switch circuit 12 for the drive voltage. The base of the drive transistor Q2 is connected to the collector of a motor terminal voltage detection transistor Q1 which serves as a motor rotation detection sensor. When the transistor Q1 detects a terminal voltage (induction electromotive force) of the motor 10 and is kept on, a current is supplied from the base of the transistor Q2 to the collector of the transistor Q1. Therefore, the drive transistor Q2 is turned on, and the drive voltage is applied from the collector of the transistor Q2 to the motor 10.

The base-emitter path of the rotation detection transistor Q1 is connected through an emitter resistor R1 and a transistor Q4 so as to detect a terminal voltage of the motor 10 i.e., a magnitude of the induced electromotive force. This connection constitutes a motor terminal voltage detector 14.

When the motor 10 is rotated and an induced voltage having a level higher than a predetermined level is generated, the base-emitter path of the transistor Q1 is rendered conductive, and the transistor Q1 is turned on. Therefore, the transistor Q2 is kept on. The transistor Q4 is normally ON as is described later.

A switch S3 is inserted in series between the power source E and the switch S1, and is connected in parallel with the drive transistor Q2. The switch S3 is interlocked with the switches S1 and S2. When the switches S1 and S2 are operated, the switch S3 is closed to temporarily supply a current to start the motor 10. After start of the motor 10, the transistor Q2 is kept on, as described above, thereby maintaining rotation of the motor 10.

A current detection resistor R0 is connected in series with the emitter of the drive transistor Q2. The terminals of the current detection resistor R0 are respectively connected to the base and emitter of a current limiting transistor Q3 through a variable resistor VR3, thereby constituting a current limiter circuit 16. When a motor current reaches a preset upper limit, the transistor Q3 is rendered conductive by a voltage drop across the resistor R0 and the base potential of the drive transistor Q2 is pulled up to the power source voltage while the collector potential of the transistor Q2 is decreased. Therefore, an increase in current is prevented. In this case, the limiting current value can be changed by adjusting the resistance of the variable resistor VR3.

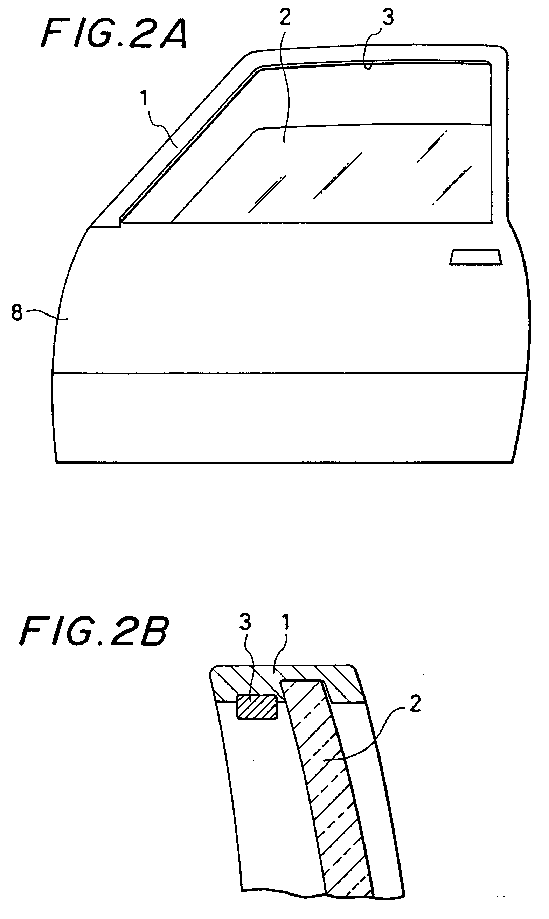

Fig. 2A is a side view showing the main part of an automobile door, and Fig. 2B is a sectional view of an upper window frame portion. A window glass 2 is moved upward/downward by a motor 10 in Fig. 1. A linear pressure sensor 3 of , e.g., pressure-sensitive conductive rubber is arranged along the lower edge of the upper window frame 1 of the door. The pressure sensor 3 is arranged at a position slightly inside that portion of the window frame 1 which is brought into contact with the window glass 2. The pressure sensor 3 detects clamping of a foreign object between the window glass 2 and the window frame 1 during ascending of the window glass 2. A pressure sensor having a wide sensitivity range is commercially available as the pressure sensor 3. Since the upper end of the window glass 2 need not be detected by the pressure sensor, the pressure sensor 3 may be the one which can be operated at a very small contact pressure.

As shown in Fig. 1, the electrodes of the pressure sensor 3 are connected to a pressure sense circuit 4, and a contact pressure generated by clamping of a foreign object is converted into an electrical signal. The pressure sense circuit 4 receives a positive or negative (ground) signal from a switch S4 interlocked with the switches S1 and S2. The positive or negative signal serves as an ascending/descending signal. During ascending of the window glass, an output signal of high level is supplied to the base of the transistor Q4 through a resistor R4 to turn on the transistor Q4. Therefore, the rotation detection transistor Q1 is kept on. When a foreign object is clamped between the window glass 2 and the window frame 1 to operate the pressure sensor 3, the pressure sense circuit 4 provides an output of low level to turn off the transistor Q4. The detection transistor Q1 is turned off and then the drive transistor Q2 is turned off. Therefore, the motor 10 is powered off, and ascending of the window glass 2 is interrupted.

When the switches S1 and S2 are operated and inverted in the stop state, the pressure sense circuit 4 outputs a signal of high level even if the pressure sensor 3 detects the foreign object. In this case, the transistor Q4 is turned on. When the switch S3 is closed in synchronism with inversion of the switches S1 and S2, the detection transistors Q1 and the drive transistor Q2 are turned on. Therefore, the motor 10 is rotated in the reverse direction and the window glass 2 is descended.

When the pressure sensor 3 is not operated, i.e., in a normal state, the detection transistor Q1 detects the constraint state of the motor 10 to turn off the drive transistor Q2 on the basis of the following principle at the ascending and descending ends of the window glass.

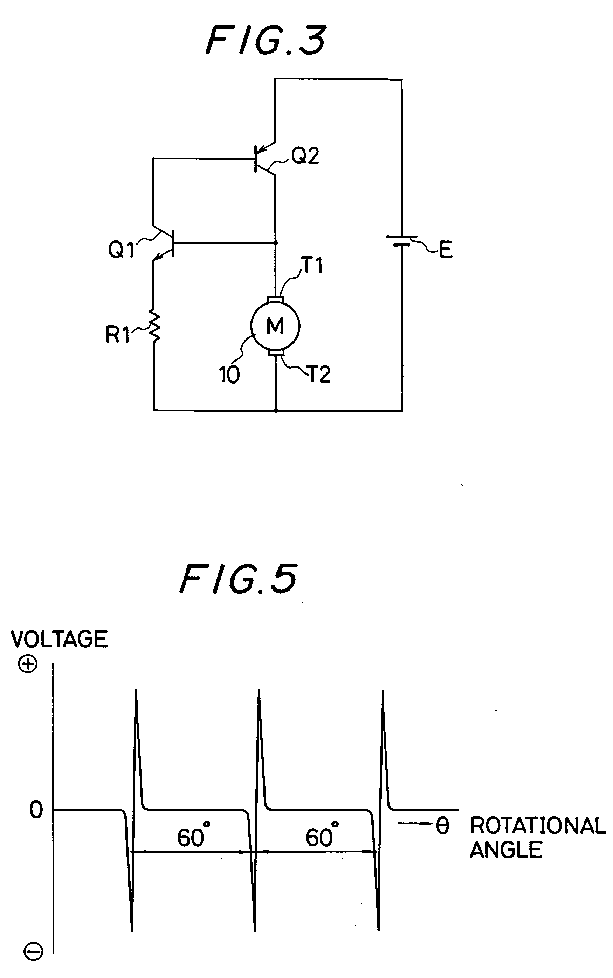

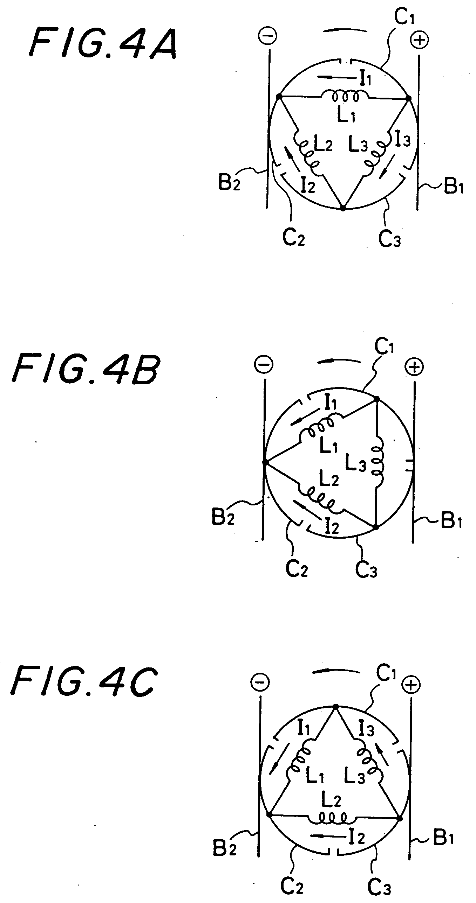

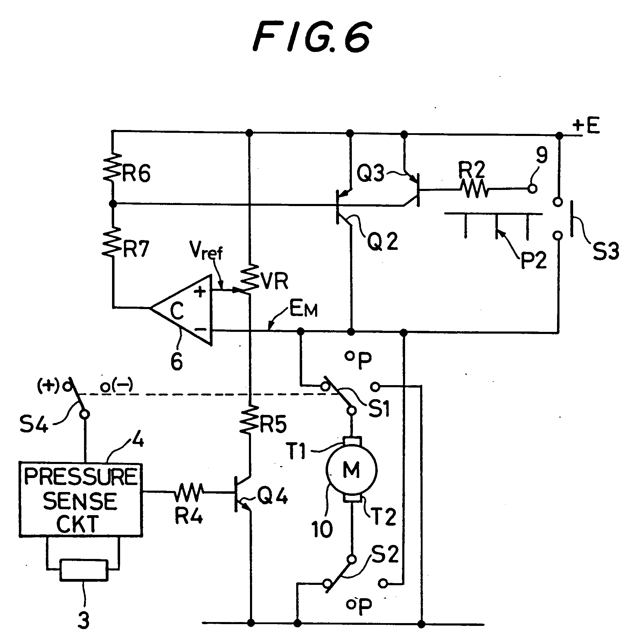

Fig. 3 shows a motor control circuit as the main part of the apparatus shown in Fig. 1. Figs. 4A to 4C show the operating positions of an armature circuit in the motor 10. In this case, the armature circuit comprises commutators C1, C2, and C3 of three phase delta windings L1, L2, and L3 and a pair of brushes B1 and B2. In the rotational position shown in Fig. 4A, a series circuit of the windings L2 and L3 is in parallel with the winding L1 between the brushes B1 and B2. In the rotational position shown in Fig. 4B, the winding L3 is short-circuited and the windings L1 and L2 are in parallel with each other. In the rotational position shown in Fig. 4C, a series circuit of the windings L1 and L3 is in parallel with the winding L2. Therefore, the direction of current is abruptly changed before and after the rotational position shown in Fig. 4C. Abrupt positive and negative pulse voltages (commutation noise) generated by electromagnetic induction between terminals T1 and T2 of the motor 10 are generated as shown in Fig. 5. The connecting state shown in Fig. 4B occurs six times per revolution of the armature. Therefore, the above pulse voltages are generated every 60°.

When the control circuit is turned on and the motor 10 is rotated in Fig. 3, the base-emitter path of the detection transistor Q1 is reverse-biased by the negative pulse generated between the terminals T1 and T2. The transistor Q1 is temporarily turned off every 60° rotation of the motor 10. As long as the motor 10 is rotated, the control circuit is kept on by the induced positive voltage.

When the motor 10 is set in the constrained state at the ascending or descending end of the window glass 10, a constraining current generally tends to flow. However, the transistor Q1 is turned off in response to the negative pulse generated by the connecting state shown in Fig. 4B prior to the constrained state. In this case, when the rotational speed of the motor 10 is reduced to a level close to the stop, an induced electromotive force $E_n$ between the terminals T1 and T2 becomes very small, thus establishing condition $E_n < V_{BE1}$ (the base-emitter voltage of the transistor Q1). The detection transistor Q1 can be no longer turned on. Therefore, the control circuit is turned off.

In the control circuit shown in Fig. 1, the resistor R1 inserted in the emitter of the transistor Q1 serves as a negative feedback element for the collector current of the transistor Q1. More specifically, when the base current of the transistor Q1 is increased to increase its collector current, the emitter voltage is increased. In this case, the base current is decreased. Therefore, the transistor Q1 can be operated in its active region. Excess minor carriers in the base region can be eliminated, so that a turn-off delay time can be minimized. For this reason, the transistor Q1 can be instantaneously turned off in response to a pulse generated by the armature winding at the polarity switching timing of the commutators upon rotation of the motor 10. Therefore, detection of the constrained state can be properly detected.

The collector current of the transistor Q1 serves as the base current of the transistor Q2. The resistance of the resistor R1 therefore can be determined such that the transistor Q2 is operated substantially in the saturation region when the transistor Q1 is turned on. When the motor 10 is set in the constrained state while the transistor Q2 is kept on and the motor 10 is rotated, the transistor Q2 is set in the turn-off region through the active region and is turned off. In other words, when the motor 10 is rotated, a voltage substantially equal to the power source voltage E appears at the terminal T1. When the transistor Q1 is substantially turned on, a sufficient base current is supplied to the transistor Q2. The transistor Q2 is ON in a state wherein the base current is overdriven. When the motor 10 is decelerated and is set in the constrained state, the potential at the terminal T1 is abruptly decreased and the collector current (base current of the transistor Q2) of the transistor Q1 is reduced. For this reason, the transistor Q2 is temporarily operated in the active region where a current obtained by multiplying the base current with a DC amplification factor is substantially set to be the collector current. The transistor Q1 is instantaneously turned off in response to the pulse noise of the motor 10. Therefore, the transistor Q2 is immediately turned off.

According to the control circuit shown in Fig. 3, when the motor 10 is set in the constrained state, it can be accurately turned off without any failure.

The pressure sensitivity of the pressure sensor 3 for detecting clamping of a body portion between the glass window and the window frame is set regardless of an opening/closing torque of the motor 10 at the ascending and descending ends of the window glass 2. Therefore, the constraint stop condition of the motor 10, i.e., the constraining torque immediately prior to power-off time can be set to be a sufficiently larger value in consideration of the deformation of the window frame 1 over time The constraining torque can be set by a limiting current value, by the current limiter circuit 16. The motor 10 is set in the constrained state at the ascending or descending end of the window glass 2, but the constraining current does not exceed the limit value preset by the variable resistor VR3. Therefore, the motor torque just prior to the constraint of the motor is a predetermined value determined by the limiting current value. The induction voltage between the terminals of the motor is decreased just prior to the constrained state of the motor 10. This state is detected by the detection transistor Q1, and the power-off state is set.

When the pressure sensor 3 is operated, the motor 10 may be rotated in the reverse direction to immediately descend the window glass. A touch sensor (e.g., a sensor for detecting an induction voltage of a human body) or a light-beam type sensor may be used in place of the pressure sensor. The sensor may be arranged such that a plurality of pairs of light-emitting and light-receiving elements are arranged along the upper or inclined side of the window frame 1 to detect clamping of a foreign object according to a light-shielding state.

As above, a sensor for detecting clamping of a foreign object between the upper edge of the window or door and the fixed frame is linearly arranged near a contact line between the edge of the window or door and the fixed frame. The closing pressure of the window or door is set to be sufficiently high in consideration of deformation or the like of the fixed frame, while the sensor sensitivity is set to be sufficiently high to protect the human body from being clamped between the glass window and the fixed frame. More specifically, the closed position need not be detected by the sensor, and the sensing level can be set regardless of the closing pressure. Therefore, an accident such as clamping of a body portion can be properly prevented.

Fig. 6 shows an automobile power window circuit according to a second embodiment of the present invention. The same reference numerals as in Fig. 1 denote the same parts in Fig. 6.

Referring to Fig. 6, a transistor Q2 connected to a terminal T1 of a motor 10 through a switch S1 serves as a switching transistor for switching a drive voltage. The base of the drive transistor Q2 is connected to the collector of a shut off transistor Q3 and to an output of a comparator 6 through a voltage divider comprised of resistors R6 and R7. The comparator 6 compares an electromotive force $E_M$ induced at the terminal T1 of the motor 10 with a reference voltage Vref generated by a voltage divider comprised of a variable resistor VR, a resistor R5, and a transistor Q4. The transistor Q4 is normally kept on.

A switch S3 parallel to the drive transistor Q2, and connected between a power source E and the switch S1, is synchronized with the switches S1 and S2. When the switches S1 and S2 are operated, the switch S3 is closed to start the motor 10 so that a current temporarily flows in the motor 10. At the start of the motor 10, a terminal voltage is the power source voltage E, an output from the comparator 6 goes to low level. A base voltage of the drive transistor Q2 is decreased to turn on the transistor Q2, thereby rotating the motor 10. If the transistor Q2 is ON, an output from the comparator 6 is kept at low level. Therefore, the transistor Q2 is kept on.

An instantaneously negative, periodic shut off pulse P2 from a terminal 9 is supplied to the base of the transistor Q3 through a resistor R2. The transistor Q3 is periodically turned on, and then the transistor Q2 is turned off to shut off the motor 10. In this case, however, if the motor 10 is kept rotating, a detection result (low level output) of the induced electromotive force $E_M$ from the comparator 6 is fed back, and the transistor Q2 is kept on.

When the transistor Q3 is turned off and the induced electromotive force $E_M$ becomes almost zero in a constrained state or near constrained state of the motor 10 at the ascending or descending end of the window glass 2, condition $E_M < Vref$ can be established so that an output from the comparator 6 is inverted to high level. Thereafter, power interruption continues since the transistor Q2 will not be turned on.

At a boundary wherein the motor 10 continues rotating or is about to shut off, condition $E_M = Vref$ is established. At this time, a quasi-constraint current $I_B$ of the motor at a speed corresponding to the induced electromotive force $E_M$ is indirectly detected by the comparator 6. In this case, a motor current is given by $Vref/R_M$ (where $R_M$ is an internal resistance of the motor), and a motor torque depends on the quasi-constraint current $I_B$. When the reference voltage Vref is controlled by the variable resistor VR, a torque generated during the motor constrained state can be controlled.

As shown in Fig. 6, electrodes of a pressure sensor 3 is connected to a pressure sense circuit 4, and a contact pressure by clamping of a foreign object is converted into an electrical signal. The pressure sense circuit 4 receives positive and negative (ground) signals from a switch S4 synchronized with the switches S1 and S2. These signals serve as ascending and descending direction signals, respectively. During ascending, an output signal of high level is supplied to the base of the transistor Q4 through a resistor R4. The transistor Q4 is turned on to keep the output of the comparator 6 to be low level. When a foreign object is clamped between the window glass 2 and the frame and the pressure sensor 3 is actuated, the pressure sense circuit 4 outputs a detection output of low level, so that the transistor Q4 is turned off. An output from the comparator 6 goes to high level, and the drive transistor Q2 is turned off. Therefore, the motor 10 is shut off and ascending of the window glass 2 is interrupted.

When the switches S1 and S2 are inverted at the stop state, the pressure sense circuit 4 outputs a signal of high level even if the pressure sensor 3 detects clamping of a foreign object. In this case, the transistor Q4 is turned on. Therefore, when the switch S3 is temporarily closed in synchronism with inversion of the switches S1 and S2, the drive transistor Q2 is turned on. Therefore, the motor 10 is rotated in the reverse direction and the window glass 2 is moved downward.

Since series-connected resistors are not used to detect a constraint current, there is not fear of generating heat or firing. When a battery or the like is used as the power source E, a maximum motor drive current may often not come to a current for generating a preset motor torque set by the variable resistor VR when the battery level is decreased below an allowable level. In this case, even if the motor 10 is constrained and stopped, the electromotive force $E_M$ is not generated, so that power interruption can be properly performed. That is, the motor 10 is prevented from being constrained or stopped while a constraint torque lower than a present value is kept generated. Unlike in the conventional constraint current detection system wherein the constraint current is detected in accordance with an increase in current value of the motor, the constraint torque is indirectly detected on the basis of a change in induced electromotive force (motor speed) of the motor. There fore, the above-mentioned constrained state detection and power shut off is reliable and safe.

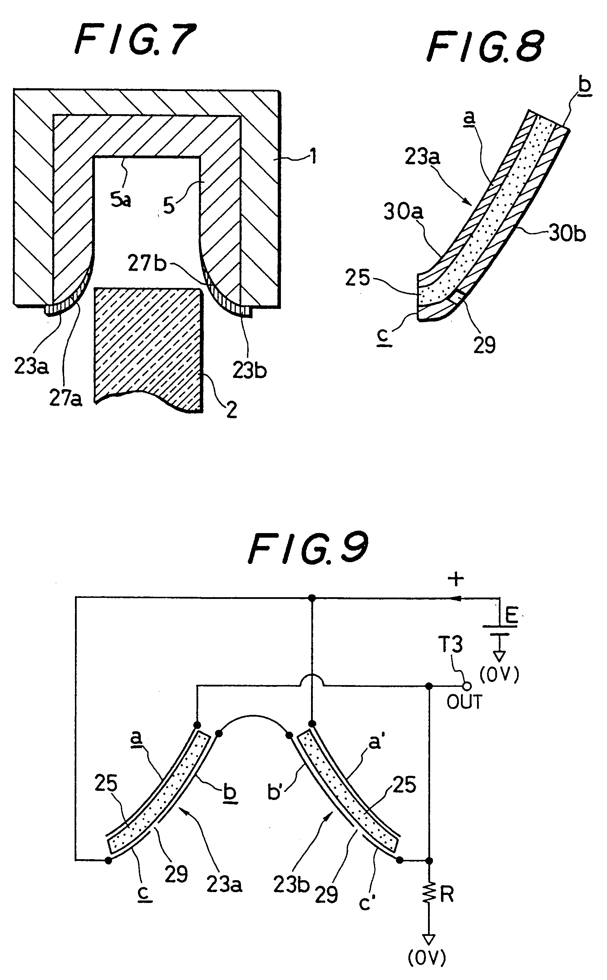

An arrangement of the pressure sensor assembly will be described with reference to Figs. 7 to 9.

As shown in a sectional view of a main part of an automobile window portion in Fig. 7, a pair of pressure sensors 23a and 23b inside and outside the automobile are mounted on glass guide tapered surfaces 27a and 27b of a window frame packing 5 fitted in a recess of a window frame 1 of a door 8. As shown by pressure sensor 3 in Fig. 2A, the pressure sensors 23a and 23b extend along the entire edges of the window frame 1 with which the end face of the window glass 2 is brought into contact. The pressure sensors 23a and 23b detect clamping of a foreign object between the edge of the window glass 2 and the window frame 1.

The window glass 2 can be ascended or descended by a power opening/closing mechanism disposed inside the door 8. Due to deformation of the door 8, the window glass 2 is ascended and reaches a contact surface 5a of the packing 5 while the window glass 2 is regulated by the glass guide tapered surfaces 27a and 27b of the packing 5.

The pressure sensors 23a and 23b are symmetrical about the window glass 2. One pressure sensor 23a has a structure (Fig. 8) wherein conductive rubber 25 whose conductivity is changed by a pressure is sandwiched between a common rear surface electrode $a$ and two front surface electrodes $b$ and $c$ electrically insulated through a gap 29. Insulating coatings 30a and 30b are formed on the outer surface of the electrode $a$ and the outer surfaces of the electrodes $b$ and $c$, respectively. The front surface electrode $b$ is located on the glass guide tapered surface 27a near the window glass 2, thereby constituting an inner portion of the pressure sensor. The front surface electrode $c$ is located on the surface 27a away from the window glass 2, thereby constituting an outer portion of the pressure sensor. The pressure sensor 23a is bent near the gap 29 such that the surface of the front surface electrode $c$ is directed in the vertical direction.

Fig. 9 shows a sensor circuit constituted by connecting electrodes of the sensors 23a and 23b. A rear surface electrode corresponding to the sensor 23b, and front surface electrodes thereof are given as a', b', and c', respectively. In principle, the sensor assembly constitutes switches $a$-$b$, $a$-$c$, a'-b', and a'-c' serving as pressure sensing switches.

The front surface electrodes $c$ and c' are used to detect a relatively large foreign object. The switches $a$-$c$ and a'-c' are connected in parallel with each other. When one of the switches $a$-$c$ and a'-c' is turned on at a given pressure, a detection output appears at an output terminal T3. In the sensor 23a, a current flows via the conductive rubber 25 and the rear surface electrode $a$ from the front surface electrode $c$, which is connected to the power source E, to the resistor R connected to the output terminal T3. Similarly, in the censor 23b, a current flows via the conductive rubber 25 and the front surface electrode c' from the rear surface electrode a', which is connected to the power source E, to the common resistor R.

The front surface electrodes $b$ and b' are used to detect a relatively small foreign object. The switches $a$-$b$ and a'-b' are connected in series with each other, constituting an AND circuit. When these switches are simultaneouly turned on, a detection output is obtained. More specifically, a current from the rear surface electrode a' connected to the power source E flows via the conductive rubber 25, the front surface electrode b', the front surface electrode $b$, the conductive rubber 25, and the rear surface electrode $a$, to the resistor R. The current then appears at the output terminal T3 as a detection signal.

Even if the glass window is ascended while being in slidable contact with the surface electrode $b$ or b' since the door 8 is bent, no detection signal is generated because of the AND circuit comprised of the switches $a$-$b$ and a'-b'. Therefore, an operation failure such as stopping or reverse rotation of the motor does not occur until the window glass 2 is completely closed.

The strip-shaped pressure sensing switches each comprised of the inner and outer portions are arranged on both the sides of the contact surface of the window or door, and the inner portions are connected to constitute an AND circuit. In a structure wherein the pressure sensing switches 23a and 23b are disposed close to each other by an interval corresponding to the thickness of the window or door so as to detect clamping of a small foreign object, even if one of the pressure sensing switches of the inner portions is turned on due to vibrations of the window or door, no detection signal is generated. In addition, the pressure sensor switches of the outer portions thereof constitute an OR circuit, so that clamping of a relatively large foreign object can be accurately detected by one or both of the pressure sensing switches.

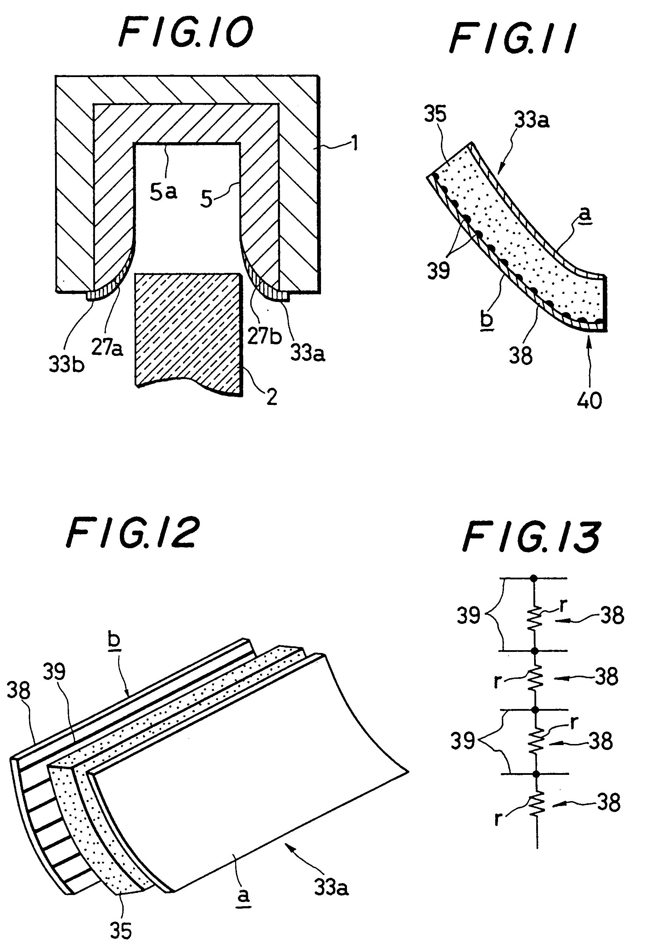

Figs. 10 to 14 show another arrangement of pressure sensors according to the present invention.

A pair of strip-sheet pressure sensors 33a and 33b inside and outside the automobile are respectively mounted on glass guide tapered surfaces 27a and 27b of a window frame packing 5 fitted in a recess of a window frame 1.

The pressure sensors 33a and 33b are symmetrical about the glass window 2. One pressure sensor 33a has a structure wherein conductive rubber 35 whose conductivity is changed by a pressure is sandwiched between a front surface electrode b and a rear surface electrode a, as shown in Figs. 11 and 12.

The front surface electrode b comprises a plurality of parallel conductors 39 formed on the inner surface of a sheet-like resistive material 38 and extending in a longitudinal direction of the strip-sheet pressure sensor 33a. The rear surface electrode a comprises a sheet-like conductive material. The pressure sensor 33a is bent at a bent portion 40 near the lower end thereof. The electrode b of the bent portion 40 extends in a direction substantially perpendicular to the vertical direction of the window glass 2.

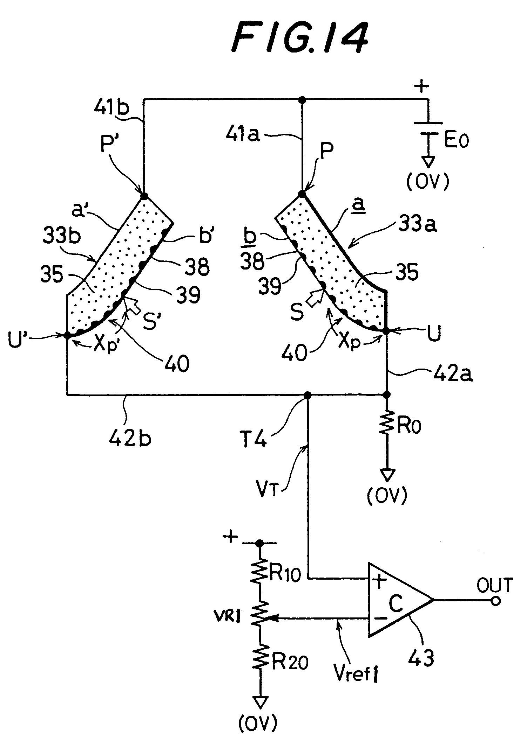

As shown in an equivalent circuit of Fig. 13, the front surface electrode b couples the conductors 39 through interline resistances r of the sheet-like resistive material.

Fig. 14 shows a sensor circuit arranged by connecting electrodes of the sensors 33a and 33b. A front surface electrode of the sensor 33b and its rear surface electrode are given as b' and a', respectively. The rear surface electrodes a and a' are connected from corresponding ends P and P' to a power source $E_0$ through corresponding power lines 41a and 41b. The front surface electrodes b and b' are commonly connected to an output terminal T4 through corresponding output lines 42a and 42b connected to conductors 39 at outermost points U and U' (far ends from the window glass 1). The front surface electrodes b and b' are grounded through a resistor $R_0$. A signal appearing at the output terminal T4 is supplied to a comparator 43 and is compared with a reference voltage Vref1 set by a voltage divider composed of a resistor R10, a variable resistor VR1 and a resistor R20.

Portions between the electrode a and b and between the electrodes a' and b' constitute switches a-b and a'-b' which are sensitive to a pressure. The switches a-b and a'-b' are short-circuited at pressure points S and S' on the electrodes b and b', indicated by arrows, respectively. Resistances of the sensors are changed in accordance with distances $x_p$ and $x_p'$ from the outermost points U and U' to the pressure points indicated by the arrows, respectively. In other words, resistances $R_{xp}$ and $R_{xp'}$ between the P-U and P'-U' intervals are changed in accordance with changes in the distances $x_p$ and $x_{p'}$, respectively. If the pressure points S and S' are close to the points U and U', the resistances $R_{xp}$ and $R_{xp'}$ are low. Otherwise, the resistances $R_{xp}$ and $R_{xp'}$ are high. Each resistance is proportional to the number of conductors 39 from the points U and U' to the pressure points.

A voltage $V_T$ appearing at an output terminal T4 is given as follows:

$$V_T = R_0 E_0 / (R_{xp}//R_{xp'} + R_0) \quad (1)$$

where // represents a parallel resistance.

A value of the parallel resistance $R_{xp}//R_{xp'}$ obtained when the pressure points S and S' are located at positions inward from the bent portions 40 by a distance twice a distance of the bent portion 40 is given as $r_0$. A value of the variable resistor VR1 is set such that the corresponding output voltage $V_T$ is equal to the reference voltage Vref1 of the comparator 43. If the following inequality is established in an area outward from the above-mentioned pressure points S and S':

$$R_{xp}//R_{xp'} < r_0 \quad (2)$$

$V_T$ in equation (1) satisfies condition $V_T > $ Vref1. Therefore, an output from the comparator 43 is a detection output (high level) representing clamping of a foreign object.

Condition (1)

In an area ranging from the points for $R_{xp} < r_0$ or $R_{xp'} < r_0$ to the outermost points U and U' outside the pressure points S and S' where $V_T = $ Vref1 if only one of the sensors 33a and 33b is depressed, $R_{xp}$ or $R_{xp}$ of the other sensor has almost an infinite resistance, thus establishing inequality (2). Under this condition, when a hand or neck is clamped between the window frame 1 and the window glass 2, the comparator 43 generates a detection output of high level.

The pressure points for $R_{xp} < r_0$ or $R_{xp'} < r_0$ are located at positions outward by about 1/2 of the distances $X_p$ or $X_{p'}$ for $V_T$ (equation (1)) = Vref1. These pressure points are set near the bent portions 40.

Condition (2)

In an area where $R_{xp} > r_0$ and $R_{xp'} > r_0$, i.e., an area inside the area satisfying condition (1), the window glass 2 is ascended while being in slidable contact with the electrode a or a' because of the distorted door. In this case, the sign of inequality (2) is reversed, and no detection output is generated. Therefore, an operation failure such as stop or reverse rotation of the motor does not occur until the window glass 2 is completely closed.

In an area outside the pressure points for $V_T$ - (equation (1)) = Vref1 with simultaneous depression of the sensors 33a and 33b, inequality (2) is established. A clamping detection signal is generated.

As described above, when the reference voltage Vref1 is properly determined by the variable resistor VR1 a detection signal is generated when one or both of the pressure sensors 33a and 33b are depressed in an area outside given points. When only one of the sensors 33a and 33b is depressed in an area inside the given points, no detection output is generated. Therefore, the operation failure can be prevented, while the distance between the sensors 33a and 33b can be reduced to form a gap substantially corresponding to the thickness of the window glass, thereby detecting clamping of a very small foreign object.

The same function as described above if the front and rear surface electrodes b and a are reversed from each other. Separate comparators 43 may be arranged for the pressure sensors 33a and 33b. In this case, each pressure point is discriminated as a point outside or inside a preset point in accordance with a resistance value. If a pressure is detected by one of the inner portions, no detection output is generated. However, if a pressure is detected by one or both of the outer portions and both of the inner portions, a detection output is generated. Such logical processing may be performed on the basis of outputs from the separate comparators.

As has been described above, the strip-sheet pressure sensing switches 33a and 33b are arranged on both sides of the contact surface 5a of the window or door. The resistances from the pressure points of the pressure sensing switches to the output terminals are changed in a direction away from the contact surface 5a. The threshold resistance of the outer portion is different from that of the inner portion during the switch ON states. The threshold resistance is preset in a widthwise direction of the strip-sheet. In an arrangement wherein the pressure sensing switches are arranged close to each other at an interval corresponding to about the thickness of the window or door to allow detection of clamping of a small foreign object, detection levels corresponding to the ON resistance values are discriminated. Even if only one of the inner portions of the sensor switches is turned on due to vibrations of the window or door, an erroneous detection signal is not generated. In addition, one or both of the outer portions as the pressure sensing switches accurately detect clamping of a relatively large foreign object.

## Claims

1. A motor-powered closing/opening apparatus comprising:
    an electromagnetic motor (10) serving as a mechanical power source for a mechanism for opening/closing a slidable window or a door (2);
    a constraint stop circuit (12, 14; Q2, Q4, 6) for detecting a constrained state of said motor (10) and stopping power supply to said motor (10);
    a sensor (3) for detecting clamping of a foreign object between a fixed frame (1) and an edge of the window (2) or door; and
    switching means (S1, S2) for turning off the power supply to said motor (10) or turning on the power supply and inverting its polarity in response to an output from said sensor (3);
    characterized by said sensor (3) being arranged on the fixed frame (1) close to and on a contact line between the fixed frame (1) and the edge of the window (2) or door; and in that the constraint stop circuit comprises:
    a drive transistor (Q2) connected between a power source (E) and one terminal of said motor (10) for supplying/shutting off the current to said motor; and
    detection means (14; 6) connected to said drive transistor (Q2) and operable to detect a level of an induced electromotive force ($E_m$) generated by rotation of the rotor of the motor (10) and to turn on/turn off said drive transistor (Q2) in dependence on the detected level.

2. An apparatus according to claim 1, characterised by switching means (Q3) for periodically cutting off the current supplied to the motor (10) to permit monitoring of rotation of said motor (10) with said detection means (14; 6).

3. An apparatus according to claim 2, characterised in that said detection means comprises:
    a first transistor (Q1) connected between the terminals of said motor (10) for detecting an induction voltage of said motor upon rotation of its rotor, and
    said drive transistor (Q2) and first transistor (Q1) are so connected that the drive transistor (Q2) is turned on when the first transistor (Q1) is turned on, and that the first transistor (Q1) is turned off and then the drive transistor (Q2) is turned off when the motor (10) is set in a constrained state.

4. An apparatus according to claim 2, characterised by a current limiting circuit (16) for limiting the current passing through said constraint stop circuit (12; Q2).

5. An apparatus according to claim 1, characterised by a sense circuit (4) connected to said sensor (3) and having a control input (S4) representing movement direction of said window or door (2), the sense circuit (4) being arranged to supply a clamp detection output from said sensor (3) to switching means (Q4) for disabling the motor (10) in response to detection of clamping when said window or door (2) is driven in a closing direction.

6. An apparatus according to claim 3, characterised by a momentary switch (S3) paralleled with said stop circuit (12, 14) to temporarily supply said power supply to said motor (10).

7. An apparatus according to claim 3, characterised in that said motor (10) comprises a DC brush motor (10), and said first transistor (Q1) is periodically turned off in response to commutation noise generated at a terminal of said DC brush motor (10).

8. An apparatus according to claim 1, characterised in that said detection means comprises:
    a comparator (6) for comparing an electromotive force induced at a motor terminal (T1 or T2) with a reference voltage (Vref ), said drive transistor (Q2) being turned on in response to an output from said comparator (6), for applying a drive voltage to said motor (10);
    a shut-off transistor (Q3) for causing said drive transistor (Q2) to periodically and instantaneously turn off; and
    a reference circuit (VR, R5, Q4) for forming said reference voltage (Vref).

9. An apparatus according to claim 8, characterised in that said reference circuit comprises reference voltage regulating means (VR) for setting a constraint torque of said motor (10).

10. An apparatus according to claim 8, characterised in that said reference circuit comprises a transistor (Q4) that in its ON state enables said reference circuit to generate the reference voltage and that said sensor (3) is adapted to determine the state of said transistor (Q4) in dependence upon detection or not of clamping.

11. An apparatus according to claim 1, characterised in that said sensor (3) comprises a pair of strip-sheet pressure switches (23a, 23b; 33a, 33b).

12. An apparatus according to claim 11, characterised in that said pair of pressure switches (23a, 23b; 33a, 33b) are mounted on tapered guide surfaces (27a, 27b) of a window frame packing (5) fitted in a recess of said fixed frame (1) for receiving said edge.

13. An apparatus according to claim 12, characterised in that each pressure switch, (23a, 23b) is further divided into an inner portion ($\underline{a}$, $\underline{b}$; a',

b') adjacent to the contact line and an outer portion ($\underline{a}$; $\underline{c}$; a', c'), said inner portions ($\underline{a}$, $\underline{b}$; a', b') constituting an AND circuit, and said outer portions ($\underline{a}$, $\underline{c}$; a', c') constituting an OR circuit.

14. An apparatus according to claim 13, characterised in that each pressure switch (23a, 23b) comprises a pressure sensitive strip (25) having the resistance decreased in response to pressure, and front and rear electrodes ($\underline{a}$, $\underline{b}$, $\underline{c}$; a', b', c') formed on front and rear surfaces thereof,
    said front electrode ($\underline{b}$, $\underline{c}$; b', c') being divided into an inner electrode ($\underline{b}$; b') closer to said window (2) and an outer electrode ($\underline{c}$; c') away from said window (2) and spaced apart from said inner electrode ($\underline{b}$; b') by a gap (29), said common rear electrode ($\underline{a}$; a') and said inner and outer front electrodes ($\underline{b}$; $\underline{c}$; b', c') constituting said inner and outer portions respectively.

15. An apparatus according to claim 14, characterised in that each pressure switch (23a, 23b) is bent at a position corresponding to said gap (29), and said outer portion substantially faces the direction of movement of said window (2) or door.

16. An apparatus according to claim 15, characterised in that said inner electrodes ($\underline{b}$, b') are coupled to each other, said common rear electrode ($\underline{a}$) of one (23a) of the pressure switches is coupled to said outer electrode (c') of the other pressure switch (23b) to constitute a node connected to an output terminal (T3), and said outer electrode ($\underline{c}$) of the one pressure switch (23a) is coupled to said common rear electrode (a') of the other pressure switch (23b) to constitute another node connected to the power source (E).

17. An apparatus according to claim 12, characterised in that each pressure switch (33a, 33b) comprises a pressure sensitive strip (35) whose resistance is decreased in response to pressure, and electrodes ($\underline{a}$, $\underline{b}$; a', b') formed on upper and lower surfaces thereof, one electrode ($\underline{b}$; b') comprising a sheet-like resistive member (38) with a plurality of parallel conductors (39) formed on one side thereof and extending along a longitudinal direction thereof,
    and in that each pressure switch (33a, 33b) is so connected in a circuit that its resistance is substantially proportional to the number of said conductors (39) from a pressure point to an output terminal (T4) when pressure is applied to the pressure switch (33a, 33b).

18. An apparatus according to claim 17, characterised in that the said circuit includes a detector (RO) for converting the resistance of the pressure switches (33a; 33b) into a detection voltage (VT), and a comparator (43) for comparing said detection voltage (VT) with a reference voltage (Vref1), wherein positions of pressure points of said pressure switches (33a, 33b) are discriminated as belonging to an inner or outer area according to an output from said comparator (43).

19. An apparatus according to claim 18, characterised in that outermost points (U, U') of said one electrodes (b, b') are connected to each other to provide said output terminal (T4) at an input of said comparator (43), and said other electrodes (a, a') are connected in common to a power source (Eo), thereby connecting said pressure switches (33a, 33b) in parallel with each other, and

the reference voltage (Vref1) is set such that a detection output representing no pressure is generated when only one of said pressure switches (33a, 33b) is turned on in a pair of said inner regions, the resistance of said other pressure switch in its off state being very high so that the parallelled resistance of said pressure switches is very high.

**Patentansprüche**

1. Motorisch betriebene Öffnungs-/Schließvorrichtung mit

einem eletromagnetischen Motor (10), der als mechanischer Antrieb für einen Mechanismus zum Öffnen/Schließen eines beweglichen Fensters oder einer Tür (2) dient;

einer Not-AUS-Schaltung (12, 14; Q2, Q4, 6) zum Erfassen eines Zwangszustands des Motors (10) und Unterbrechen der Energiezufuhr zu dem Motor (10);

einem Sensor (3), der erkennt, ob ein fremdes Objekt zwischen einem feststehenden Rahmen (1) und einer Kante des Fensters (2) oder der Tür eingeklemmt ist; und

Schaltmitteln (S1, S2) zum Unterbrechen der Energiezufuhr zu dem Motor (10) oder zum Einschalten der Energiezufuhr und Vertauschen seiner Polarität, in Abhängigkeit von einer Ausgabe des Sensors (3);

**dadurch gekennzeichnet**, daß der Sensor (3) auf dem feststehenden Rahmen (1) nahe bei und auf einer Kontaktlinie zwischen dem feststehenden Rahmen (1) und der Kante des Fensters (2) oder der Tür angeordnet ist;

und daß die Not-AUS-Schaltung aufweist:

einen Treibertransistor (Q2), der zwischen einer Leistungsquelle (E) und einem Anschluß des Motors (10) zum Verbinden/Unterbrechen des Stroms zu dem Motor geschaltet ist; und

Erfassungsmitteln (14; 6), die mit dem Treibertransistor (Q2) verbunden sind und den Pegel der durch Rotation des Rotors des Motors (10) erzeugten, induzierten elektromotorischen Kraft ($E_m$) abfragen und den Treibertransistor (Q2) in Abhängigkeit von der erfaßten Stärke EIN-/AUS-Schalten können.

2. Vorrichtung nach Anspruch 1, **gekennzeichnet durch** eine Schalteinrichtung (Q3) zum periodischen Unterbrechen des an den Motor (10) gelieferten Stroms, zur Rotationsüberwachung des Motors (10) mit den Erfassungsmitteln (14;6).

3. Vorrichtung nach Anspruch 2, **dadurch gekennzeichnet**, daß die Erfassungsmittel einen ersten Transistor (Q1) aufweisen, der zwischen den Anschlüssen des Motors (10) zum Erfassen einer Induktionsspannung des Motors aufgrund der Rotation seines Rotors geschaltet ist, und daß

der Treibertransistor (Q2) und der erste Transistor (Q1) so geschaltet sind, daß der Treibertransistor (Q2) eingeschaltet wird, wenn der erste Transistor (Q1) eingeschaltet ist, und daß der erste Transistor (Q1) ausgeschaltet wird und dann der Treibertransistor (Q2) ausgeschaltet wird, wenn beim Motor (10) ein Zwangszustand entsteht.

4. Vorrichtung nach Anspruch 2, **gekennzeichnet durch** eine Strombegrenzerschaltung (16) zum Begrenzen des durch die Not-AUS-Schaltung (12, Q2) fließenden Stroms.

5. Vorrichtung nach Anspruch 1, **gekennzeichnet durch** eine Abtastschaltung (4), die mit dem Sensor (3) verbunden ist und einen der Bewegungsrichtung des Fensters oder der Tür (2) entsprechenden Kontrolleingang (S4), wobei die Abtastschaltung (4) ein vom Sensor (3) ausgegebenes Klemmsignal an eine Schalteinrichtung (Q4) zum Entregen des Motors (10) liefert in Abhängigkeit vom Erkennen eines Klemmzustands, wenn das Fenster oder die Tür (2) in einer Schließrichtung betätigt werden.

6. Vorrichtung nach Anspruch 3, **gekennzeichnet durch** einen parallel zu der Not-AUS-Schaltung (12, 14) liegenden Kurzzeitschalter (S3), um zeitweilig die Energieversorgung mit dem Motor (10) zu verbinden.

7.  Vorrichtung nach Anspuch 3, **dadurch gekennzeichnet**, daß der Motor (10) ein Gleichstrom-Bürstenmotor (10) ist, und der erste Transistor (Q1) periodisch in Abhängigkeit von einem an einem Anschluß des Gleichstrom-Bürstenmotors (10) erzeugten Kommutations-Störung ausgeschaltet wird.

8.  Vorrichtung nach Anspruch 1, **dadurch gekennzeichnet**, daß die Erfassungsmittel umfassen:

    einen Komparator (6) zum Vergleichen einer an einem Motoranschluß (T1 oder T2) induzierten, elektromotorischen Kraft mit einer Referenzspannung (Vref), wobei der Treibertransistor (Q2) in Abhängigkeit von einem Ausgang des Komparators (6) eingeschaltet wird, um eine Treiberspannung an den Motor (10) zu liefern;

    einen Sperrtransistor (Q3), der Treibertransistor (Q2) periodisch und unmittelbar anschaltet; und

    eine Referenzschaltung (VR, R5, Q4) zum Erzeugen der Referenzspannung (Vref).

9.  Vorrichtung nach Anspruch 8, **dadurch gekennzeichnet**, daß die Referenzschaltung eine Einrichtung (VR) zum Regeln der Referenzspannung aufweist, um mit den Motor mit einem Zwangsdrehmoment zu beaufschlagen.

10. Vorrichtung nach Anspruch 8, **dadurch gekennzeichnet**, daß die Referenzschaltung einen Transistor (Q4) aufweist, der in seinem EIN-Zustand die Referenzschaltung, die Referenzspannung aktiviert, und daß der Sensor (3) den Zustand des Transistors (Q4) in Abhängigkeit von der Erfassung des Klemmens festlegt.

11. Vorrichtung nach Anspruch 1, **dadurch gekennzeichnet**, daß der Sensor (3) ein Paar Streifen-Druckschalter (23a, 23b; 33a, 33b) aufweist.

12. Vorrichtung nach Anspruch 11, **dadurch gekennzeichnet**, daß das Paar Streifen-Druckschalter (23a, 23b; 33a, 33b) auf sich verjüngenden Führungsflächen (27a, 27b) einer Fensterrahmendichtung (5) angebracht ist, die in eine Ausnehmung des feststehenden Rahmens (1) eingesetzt ist, um die Kante aufzunehmen.

13. Vorrichtung nach Anspruch 12, **dadurch gekennzeichnet**, daß jeder Druckschalter (23a, 23b) in einen an die Berührungslinie angrenzenden inneren Teil (a, b; a', b') und einen äußeren Teil (a, c; a', c') aufgeteilt ist, wobei der innere Teil (a, b; a', b') eine UND-Schaltung bildet und der äußere Teil (a, c; a', c') eine ODER-Schaltung bildet.

14. Vorrichtung nach Anspruch 13, **dadurch gekennzeichnet**, daß jeder Druckschalter (23a, 23b) einen druckempfindlichen Streifen (25), dessen Widerstand sich in Abhängigkeit vom Druck verkleinert, und Vorder- und Rückseitenelektroden (a, b, c; a', b', c') aufweist, die an dessen Vorder- und Rückseiten ausgebildet sind,

    wobei die Vorderseitenelektrode (b, c; b', c') in eine innere, näher beim Fenster (2) liegende Elektrode (b; b') und eine äußere, vom Fenster (2) entfernte und von der inneren Elektrode (b; b') durch einen Spalt (29) beabstandete Elektrode (c; c') aufgeteilt ist und die geminsame Rückseitenelektrode (a; a') und die inneren und äußeren Vorderseitenelektroden (b, c; b', c') jeweils die inneren und äußeren Teile bilden.

15. Vorrichtung nach Anspruch 14, **dadurch gekennzeichnet**, daß jeder Druckschalter (23a, 23b) an einer dem Spalt (29) entsprechenden Stelle gebogen ist, und daß der äußere Teil im wesentlichen der Bewegungsrichtung des Fensters (2) oder der Tür gegenübersteht.

16. Vorrichtung nach Anspruch 15, **dadurch gekennzeichnet**, daß die Inneren Elektroden (b, b') miteinander gekoppelt sind, daß die gemeinsame Rückseitenelektrode (a) von einem (23a) der Druckschalter mit der äußeren Elektrode (c') des anderen Druckschalters (23b) gekoppelt ist, um einen mit dem Ausgangsanschluß (T3) verbundenen Knoten zu bilden, und daß die äußere Elektrode (c) des einen Druckschalters (23a) mit der gemeinsamen Rückseitenelektrode (a') des anderen Druckschalters (23b) verbunden ist, um einen anderen mit der Leistungsquelle (E) verbundenen Knoten zu bilden.

17. Vorrichtung nach Anspruch 12, **dadurch gekennzeichnet**, daß jeder Druckschalter (33a, 33b) einen druckempfindlichen Streifen (35), dessen Widerstand sich in Abhängigkeit vom Druck verkleinert, und auf seiner oberen und unteren Oberfläche ausgebildete Elektroden (a, b; a', b') aufweist, wobei eine Elektrode (b; b') ein blattähnliches, mit einem Widerstand behaftetes Teil (38) aufweist, mit einer Mehrzahl von auf einer Seite von ihm ausgebildeten, parallelen Leitern (39), die sich entlang einer Längsrichtung auf ihm erstrecken,

und daß jeder Druckschalter (33a, 33b) so in einer Schaltung angeschlossen ist, daß sein Widerstand im wesentlichen proportional zu der Anzahl von Leitern (39) zwischen einem Druckpunkt und einem Ausgangsanschluß (T4) ist, wenn Druck auf den Druckschalter (33a, 33b) ausgeübt wird.

18. Vorrichtung nach Anspruch 17, **dadurch gekennzeichnet**, daß die Schaltung einen Detektor (RO) zur Umsetzung des Widerstands der Druckschalter (33a; 33b) in eine Meßspannung (VT), und einen Komparator (43) zum Vergleichen der Meßspannung (VT) mit einer Referenzspannung (Vref1) aufweist, wobei die Positionen von Druckpunkten der Druckschalter (33a, 33b) entsprechend eines Ausgangs vom Komparator (43) im Hinblick darauf unterschieden werden, ob sie zu einem inneren oder einem äußeren Bereich gehören.

19. Vorrichtung nach Anspruch 18, **dadurch gekennzeichnet**, daß äußerste Punkte (U, U') der einen Elektroden (b, b') miteinander verbunden sind, um den Ausgangsanschluß (T4) als Eingang für den Komparator (43) zu bilden, und daß die anderen Elektroden (a, a') mit einer Leistungsquelle (Eo) gleichgeschaltet sind, wodurch die Druckschalter (33a, 33b) parallel zueinander geschaltet sind, und daß

die Referenzspannung (Vref1) so gesetzt ist, daß eine Meßausgabe erzeugt wird, die einen drucklosen Zustand repräsentiert, wenn nur einer der Druckschalter (33a, 33b) in einem Paar der inneren Bereiche eingeschaltet ist, wobei der Widerstand des anderen Druckschalters im ausgeschalteten Zustand und damit der Parallelwiderstand der Druckschalter sehr hoch ist.

**Revendications**

1. Appareil d'ouverture et de fermeture à moteur, comprenant :

un moteur électromagnétique (10) utilisé comme source d'énergie mécanique pour un mécanisme d'ouverture-fermeture d'une fenêtre coulissante ou d'une porte (2),

un circuit (12, 14 ; Q2, Q4, 6) d'arrêt de contrainte destiné à détecter un état sous contrainte du moteur (10) et à arrêter l'alimentation du moteur (10),

un capteur (3) destiné à détecter le serrage d'un objet étranger entre un cadre fixe (1) et un bord de fenêtre (2) ou de porte, et

un dispositif de commutation (S1, S2) destiné à arrêter l'alimentation du moteur (10) ou à la mettre en circuit et à inverser sa polarité en fonction d'un signal de sortie du capteur (3),

caractérisé en ce que le capteur (3) est placé sur le cadre fixe (1) à proximité d'une ligne de contact du cadre fixe (1) et et du bord de la fenêtre (2) ou de la porte et sur cette ligne, et en ce que le circuit d'arrêt de contrainte comprend :

un transistor (Q2) de pilotage connecté entre une alimentation (E) et une première borne du moteur (10), et destiné à transmettre le courant au moteur et à l'arrêter, et

un dispositif (14 ; 6) de détection connecté au transistor (Q2) de pilotage et destiné à détecter un niveau d'une force électromotrice induite (Em) créée par rotation du rotor du moteur (10) et à mettre à l'état conducteur ou non conducteur le transistor de pilotage (Q2) en fonction du niveau détecté.

2. Appareil selon la revendication 1, caractérisé par un dispositif de commutation (Q3) destiné à interrompre périodiquement le courant transmis au moteur (10) et à permettre le contrôle de la rotation du moteur (10) par le dispositif de détection (14 ; 6).

3. Appareil selon la revendication 2, caractérisé en ce que le dispositif de détection comprend :

un premier transistor (Q1) connecté entre les bornes du moteur (10) et destiné à détecter une tension d'induction du moteur lors de la rotation de son rotor, et

le transistor de pilotage (Q2) et le premier transistor (Q1) sont connectés de manière que le transistor de pilotage (Q2) soit mis à l'état conducteur lorsque le premier transistor (Q1) est mis à l'état conducteur, et en ce que le premier transistor (Q1) est mis à l'état non conducteur puis le transistor de pilotage (Q2) est mis à l'état non conducteur lorsque le moteur (10) est mis à un état sous contrainte.

4. Appareil selon la revendication 2, caractérisé par un circuit (16) de limitation du courant circulant dans le circuit d'arrêt de contrainte (12 ; Q2).

5. Appareil selon la revendication 1, caractérisé par un circuit sensible (4) connecté au capteur (3) et ayant une entrée de commande (S4) représentant le sens de déplacement de la fenêtre ou de la porte (2), le circuit sensible (4) étant destiné à transmettre un signal de sortie de détection de serrage du capteur (3) au dispositif de commutation (Q4) de manière que le moteur (10) ne puisse plus fonctionner à la suite de la détection du serrage lorsque la fenêtre ou la porte (2) est entraînée dans le sens de fermeture.

6. Appareil selon la revendication 3, caractérisé par un interrupteur temporaire (S3) monté en parallèle avec le circuit d'arrêt (12, 14) et destiné à transmettre temporairement de l'énergie au moteur (10).

7. Appareil selon la revendication 3, caractérisé en ce que le moteur (10) comprend un moteur (10) en courant continu à balais, et le premier transistor (Q1) est mis périodiquement à l'état non conducteur à la suite du bruit de commutation créé à une borne du moteur (10) en courant continu à balais.

8. Appareil selon la revendication 1, caractérisé en ce que le dispositif de détection comprend :
   un comparateur (6) destiné à comparer une force électromotrice induite à une borne du moteur (T1 ou T2) à une tension de référence (Vref), le transistor de pilotage (Q2) étant mis à l'état conducteur en fonction d'un signal de sortie du comparateur (6) afin qu'une tension de pilotage soit appliquée au moteur (10),
   un transistor d'arrêt (Q3) destiné à provoquer l'arrêt périodique et instantané du transistor de pilotage (Q2), et
   un circuit de référence (VR, R5, Q4) destiné à former la tension de référence (Vref).

9. Appareil selon la revendication 8, caractérisé en ce que le circuit de référence comprend un dispositif (VR) de régulation de tension de référence destiné à régler un couple de contraintes du moteur (10).

10. Appareil selon la revendication 8, caractérisé en ce que le circuit de référence comporte un transistor (Q4) qui, à son état conducteur, permet au circuit de référence de créer la tension de référence, et en ce que le capteur (3) est destiné à déterminer l'état du transistor (Q4) en fonction de la détection ou non du serrage.

11. Appareil selon la revendication 1, caractérisé en ce que le capteur (3) comporte une paire d'interrupteurs sous pression (23a, 23b ; 33a, 33b) sous forme d'une feuille en bandes.

12. Appareil selon la revendication 11, caractérisé en ce que la paire d'interrupteurs sous pression (23a, 23b ; 33a, 33b) est montée sur des surfaces inclinées de guidage (27a, 27b) d'une garniture (5) de cadre de fenêtre placée dans une cavité d'un cadre fixe (1) pour le logement dudit bord.

13. Appareil selon la revendication 12, caractérisé en ce que chaque interrupteur sous pression (23a, 23b) est en outre divisé en une partie interne (a, b ; a', b') adjacente à la ligne de contact et une partie externe (a, c ; a', c'), les parties internes (a, b , a', b') constituant un circuit ET et les parties externes (a, c, a', c') constituant un circuit OU.

14. Appareil selon la revendication 13, caractérisé en ce que chaque interrupteur sous pression (23a, 23b) comprend une bande manosensible (25) dont la résistance diminue avec la pression, et des électrodes avant et arrière (a, b, c ; a', b', c') formées sur les surfaces avant et arrière,
   l'électrode avant (b, c ; b', c') étant divisée en une électrode interne (b ; b') plus proche de la fenêtre (2) et une électrode externe (c ; c') plus distante de la fenêtre (2) et séparée de l'électrode interne (b ; b') par un espace (29), l'électrode arrière commune (a ; a') et les électrodes avant interne et externe (b, c ; b', c') constituant les parties interne et externe respectivement.

15. Appareil selon la revendication 14, caractérisé en ce que chaque interrupteur sous pression (23a, 23b) est replié vers une position correspondant audit espace (29), et la partie externe est pratiquement tournée dans la direction de déplacement de la fenêtre (2) ou de la porte.

16. Appareil selon la revendication 15, caractérisé en ce que les électrodes internes (b, b') sont couplées l'une à l'autre, l'électrode arrière commune (a) de l'un (23a) des interrupteurs sous pression est couplée à l'électrode externe (c') de l'autre interrupteur sous pression (23b) pour la constitution d'un noeud connecté à une borne de sortie (T3), et l'électrode externe (c) du premier interrupteur sous pression (23a) est couplée à l'électrode arrière commune (a') de l'autre interrupteur sous pression (23b) pour la constitution d'un autre noeud connecté à l'alimentation (E).

17. Appareil selon la revendication 12, caractérisé en ce que chaque interrupteur sous pression (33a, 33b) comprend une bande manosensible (35) dont la résistance est réduite par une pression, et des électrodes (a, b ; a', b') formées sur les surfaces supérieure et inférieure de la bande, une première électrode (b ; b') comprenant un organe résistif (38) en forme de feuille ayant plusieurs conducteurs parallèles (39) formés sur une face et placés dans sa direction longitudinale, et

en ce que chaque interrupteur sous pression (33a, 33b) est connecté dans un circuit de manière que sa résistance soit pratiquement proportionnelle au nombre des conducteurs (39) d'un point de pression à une borne de sortie (T4) lorsqu'une pression est appliquée à l'interrupteur sous pression (33a, 33b).

18. Appareil selon la revendication 17, caractérisé en ce que le circuit comprend un détecteur (RO) destiné à transformer la résistance des interrupteurs sous pression (33a ; 33b) en une tension de détection (VT), et un comparateur (43) de comparaison de la tension de détection (VT) à une tension de référence (Vref1), dans lequel des positions des points de pression des interrupteurs sous pression (33a, 33b) sont distinguées comme appartenant à une zone interne ou une zone externe en fonction d'un signal de sortie du comparateur (43).

19. Appareil selon la revendication 18, caractérisé en ce que des points externes (U, U') des premières électrodes (b, b') sont connectés mutuellement pour la formation de la borne de sortie (T4) à une entrée du comparateur (43), et les autres électrodes (a, a') sont connectées en commun à une alimentation (Eo), si bien que les interrupteurs sous pression (33a, 33b) sont connectés en parallèle, et

la tension de référence (Vref1) est réglée de manière qu'un signal de sortie de détection ne représentant aucune pression soit créé lorsque seul l'un des interrupteurs sous pression (33a, 33b) est fermé dans une paire des régions internes, la résistance de l'autre interrupteur sous pression à son état ouvert étant très élevée afin que la résistance en parallèle des interrupteurs sous pression soit très élevée.

# FIG.1

*FIG.2A*

*FIG.2B*

# FIG.3

# FIG.5

FIG.4A

FIG.4B

FIG.4C

# FIG.6

FIG.7

FIG.8

FIG.9

# FIG.10

5a 5
1
33b 27a 27b 33a
2

# FIG.11

35 33a
a
39
b
38
40

# FIG.12

b
39
38
a
33a
35

# FIG.13

39 r 38
r 38
39 r 38
r 38

22

# FIG.14